# EUROPÄISCHE PATENTSCHRIFT

(11) **EP 1 272 041 B1**
(45) Veröffentlichungstag und Bekanntmachung des Hinweises auf die Patenterteilung: **24.09.2003**
(21) Anmeldenummer: 01938081.5
(22) Anmeldetag: 03.04.2001
(51) Int. Cl.: A22B 5/08, A22B 5/00

(54) **SCHLACHTTIER-VORREINIGUNGS- UND BRÜHANLAGE**
PRE-CLEANING AND SCALDING PLANT FOR ANIMALS FOR SLAUGHTER
INSTALLATION DE PRENETTOYAGE ET D'EBOUILLANTAGE D'ANIMAUX DE BOUCHERIE

(30) Priorität: 03.04.2000 DE 10016533
(43) Veröffentlichungstag der Anmeldung: 08.01.2003
(73) Patentinhaber: Banss Schlacht- und Fördertechnik GmbH, 35216 Biedenkopf (DE)
(72) Erfinder: WEIDE, Harald, 35216 Biedenkopf (DE)
(74) Vertreter: Klunker . Schmitt-Nilson . Hirsch
(86) Internationale Anmeldenummer: EP0103789
(87) Internationale Veröffentlichungsnummer: WO01074170

(56) Entgegenhaltungen:
- WO-A-98/32337
- DE-A- 19 517 331

## Beschreibung

Die Erfindung bezieht sich auf eine Schlachttier-Vorreinigungs- und Brühanlage, aufweisend eine Vorreinigungsvorrichtung mit einer Wasserzuführeinrichtung zum Zuführen von Wasser für das Vorreinigen der Schlachttiere in den Arbeitsraum der Vorreinigungsvorrichtung und eine nach dem Kondensationsprinzip arbeitende Brühvorrichtung mit einer Wassersprüheinrichtung zum fein verteilten Einbringen von Wasser in das Brühmedium der Brühvorrichtung. Vgl. z.B. die Druckschriften DE-A19517331 and WO-A-9832337.

Derartige Anlagen sind bekannt. Bekannt ist es auch, die nach dem Kondensationsprinzip arbeitende Brühvorrichtung als Brühvorrichtung mit Umwälzung des Brühmediums und Einstellung von Temperatur und Wassergehalt des Brühmediums in einem neben dem Arbeitsraum der Brühvorrichtung liegenden Teil des Umwälzweges auszubilden. Die erfindungsgemäße Anlage weist vorzugsweise eine derart ausgebildete Brühvorrichtung auf. An demjenigen Teil des Umwälzweges des Brühmediums ist das Brühmedium warme Luft von normalerweise etwa 58 bis 65°C, die mit Wasserdampf übersättigt ist. Durch Kondensatsion von Wasserdampf auf den Schlachttieren, und zusätzlich durch das Umströmtwerden mit dem heißen Brühmedium, wird Wärme auf die Schlachttiere übertragen und werden die Schlachttiere an ihrer Oberfläche auf die erforderliche Brühtemperatur gebracht. Das von dem betreffenden Schlachttier ablaufende, kondensierte Wasser nimmt außerdem noch etwaig vorhandenen Schmutz mit.

Das in der Vorreinigungsvorrichtung zugeführte Wasser hat beispielsweise eine Temperatur von etwa 30 bis 40°C.

Bei Schlachttier-Vorreinigungs- und Brühanlagen der beschriebenen Art gibt es eine ganze Reihe von Arbeitsparametern, die sinnvoll gewählt werden müssen, um gut gebrühte Schlachttiere, d. h. Schlachttiere mit gut gesäuberter und für das anschließende Enthaaren gut vorbereiteter Oberfläche, zu erreichen. Bisher hat man sich auf die Parameter Wassermenge und Wassertemperatur für die Vorreinigungsvorrichtung, Temperatur und Ausmaß der Wasserübersättigung des Brühmediums in der Brühvorrichtung, Durchlaufgeschwindigkeit der Schlachttiere durch die Anlage, Intensität der Vorreinigung in der Vorreinigungsvorrichtung konzentriert.

Der Erfindung liegt die Aufgabe zugrunde, eine Schlachttier-Vorreinigungs- und Brühanlage der eingangs genannten Art verfügbar zu machen, die optimal gebrühte Schlachttiere liefert.

Zur Lösung dieser Aufgabe ist die Anlage dadurch gekennzeichnet, daß die Wasserzuführeinrichtung und die Wassersprüheinrichtung an eine gemeinsame Wasser-Entkarbonisierungsvorrichtung oder jeweils an eine eigene Wasser-Entkarbonisierungsvorrichtung angeschlossen sind, wobei die Wasser-Entkarbonisierungsvorrichtung(en) derart ausgebildet ist (sind), daß Wasser mit einer Karbonathärte von maximal 6°d geliefert wird.

Die erfindungsgemäße Anlage zeichnet sich dadurch aus, daß sowohl in der Vorreinigungsvorrichtung als auch in der Brühvorrichtung gezielt mit Wasser mit speziell niedriger Karbonathärte gearbeitet wird. Die Karbonathärte darf nicht mit der sogenannten Gesamthärte von Wasser verwechselt werden. Die Einheit "°d" bezeichnet die "deutsche Karbonathärte", die in zugänglichen Vorschriften definiert ist. Es hat sich gezeigt, daß die Einstellung des Parameters Karbonathärte auf maximal 6°d von entscheidendem Einfluß auf die Güte des Brühergebnisses ist, wobei selbstverständlich die anderen, weiter vorn genannten Parameter auch in den normalerweise für gut gehaltenen Bereichen gehalten werden.

Es wird darauf hingewiesen, daß an der Wasserzuführeinrichtung einerseits und an der Wassersprüheinrichtung andererseits nicht zwingend die gleiche Karbonathärte herrschen muß, wiewohl eine im wesentlichen gleiche Karbonathärte eine häufige, auch bevorzugte Situation ist. Es ist überraschend, daß die Karbonathärte auch in der Vorreinigungsvorrichtung eine so wesentliche Rolle spielt, obwohl dort normalerweise mit deutlich niedrigeren Temperaturen als in der Brühvorrichtung gearbeitet wird.

Vorzugsweise ist (sind) die Wasser-Entkarbonisierungsvorrichtung(en) derart ausgebildet, daß Wasser mit einer Karbonathärte von maximal 5°d geliefert wird, stärker bevorzugt von maximal 4°d, und noch stärker bevorzugt von maximal 2°d.

Für die Vorreinigungsvorrichtung sind zwei Bauarten bevorzugt, nämlich die Bauart mit Peitschenwalzen und die Bauart mit Wasserdüsen zum Aufspritzen von Druckwasser gegen die Schlachttiere. Bei der erstgenannten Bauart ist normalerweise mindestens ein Paar von Peitschenwalzen mit vertikaler Rotationsachse vorgesehen, typisch sind drei oder vier Peitschenwalzen. Peitschenwalzen sind an ihrem Umfang mit strangförmigen "Peitschen" bestzt, die bei Drehung der Peitschenwalzen auf die Schlachttiere einschlagen und durch das Auftreffen und Wegziehen die Außenoberfläche des betreffenden Schlachttiers reinigen. Mittels der Wasserzuführeinrichtung wird laufend Wasser, eingebracht, welches den von den Schlachttieren gelösten Schmutz nach unten wegschwemmt. - Bei der zweitgenarinten Bauart sind die Wasserdüsen in ähnlicher Weise vorhanden, wie man es von den sogenannten Hochdruckreinigern her kennt. Der erforderliche Reinigungseffekt wird durch das Auftreffen von Wasser mit Druck und erheblicher Geschwindigkeit gegen die Außenoberfläche des betreffenden Schlachttiers erreicht. Beide Bauarten können auch miteinander kombiniert sein.

Wie an sich bekannt, weist die Brühvorrichtung vorzugsweise eine Dampfeinjektionseinrichtung auf, mit der sich die Temperatur des Brühmediums erhöhen läßt. Das Injizieren von Dampf ist eine bequeme Möglichkeit, dem Brühmedium laufend so viel Wärme zuzuführen, wie der Brühvorrichtung durch Abgabe von Verlustwärme nach außen, durch Ablaufen von kondensiertem Wasser, und durch Herausbewegen der Schlachttiere mit höherer Temperatur als an der Eintrittsseite laufend verloren geht. Durch das Injizieren von Dampf wird dem Brühmedium Feuchtigkeit zugeführt, zusätzlich zu dem Wasser aus der Wasserzuführeinrichtung.

Der mittels der Dampfinjektionseinrichtung in das Brühmedium injizierte Dampf wird in der Regel von einem der Brühvorrichtung zugeordneten Dampferzeuger aus Wasser erzeugt. Dieses Wasser wird vorzugsweise vor der Dampferzeugung "abgesalzt", d. h. in seinem Salzgehalt verringert. Beim Absalzen geht es primär um die Vermeidung von Verkalkungen im Dampferzeuger.

Vorzugsweise ist der Wassersprüheinrichtung und/oder der Dampfinjektionseinrichtung (jeweils) ein Mengenregelventil zugeordnet. Mit diesem Mengenregelventil bzw. diesen Mengenregelventilen läßt sich insbesondere eine optimale Temperatur des Brühmediums beim Inkontaktkommen mit dem betreffenden Schlachttier, ein optimaler Feuchtigkeitsgehalt des Brühmediums beim Inkontaktkommen mit dem betreffenden Schlachttier und ein Ausgleichen von Druckschwankungen in der Wasserzuführung erreicht.

Es wird darauf hingewiesen, daß Wasser-Entkarbonisierungsvorrichtungen am Markt erhältliche Vorrichtungen sind. Sie arbeiten normalerweise mit einem Ionentauscher, der Ca-Ionen (aus Calciumhydrogenkarbonat), Mg-Ionen (aus Magnesiumhydrogenkarbonat) und Na-Ionen (aus Natriumhydrogenkarbonat) im Austausch gegen H-Ionen aufnimmt. Der lonentauscher muß in Zeitabständen regeneriert werden, normalerweise mit Salz oder mit einer Säure. Käufliche Entkarbonisierungsvorrichtung kann man normalerweise auf eine gewünschte, zu erreichende Karbonathärte des entkarbonisierten Wassers einstellen, wobei die Einstellung meist über die Einstellung von Relativmengen von Wasser, einerseits durch die Entkarbonisierungsvorrichtung geleitet und andererseits im Bypass an der Entkarbonisierungsvorrichtung vorbeigeführt, arbeitet.

Die Erfindung und bevorzugte Weiterbildungen der Erfindung werden nachfolgend anhand eines Ausführungsbeispiels noch näher erläutert. Es zeigt:
- Fig. 1: eine schematisierte Seitenansicht einer Schlachttier-Vorreinigungs- und Brühanlage, woraus sich die grundlegende Anordnung der wesentlichen Anlagenbestandteile ergibt;
- Fig. 2: einen Vertikalschnitt, rechtwinklig zur Bewegungsrichtung der Schlachttiere, durch die Vorreinigungsvorrichtung;
- Fig. 3: einen Vertikalschnitt, rechtwinklig zur Bewegungsrichtung der Schlachttiere, durch die Brühvorrichtung.

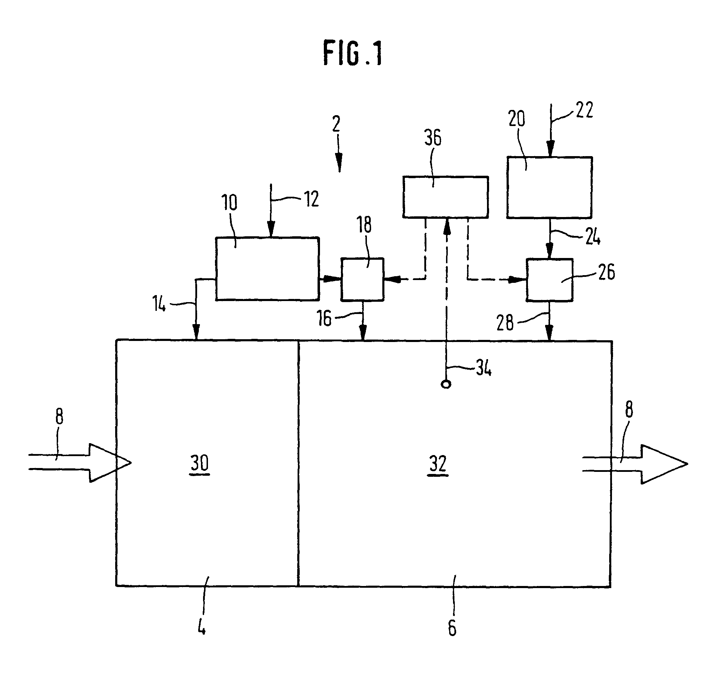

Fig. 1 zeigt stark schematisiert eine kombinierte Vorreinigungs- und Brühanlage 2 für Schlachttiere, speziell Schweine. Die Anlage 2 hat als Hauptbestandteile eine Vorreinigungsvorrichtung 4 und eine Brühvorrichtung 6. Mit den Pfeilen 8 ist die Bewegungsrichtung der Schweine durch die Anlage 2 angedeutet. Konkret muß man sich vorstellen, daß, je nach Auslegung der Anlage 2 z. B. 60 bis 240 Schweine pro Stunde durch die Anlage 2 hindurchgefördert werden.

Einer Entkarbonisierungsvorrichtung 10 wird Wasser 12 zugeführt. Entkarbonisiertes Wasser wird einer Wasserzuführeinrichtung 14 der Vorreinigungsvorrichtung 4 und einer Wassersprüheinrichtung 16 der Brühvorrichtung 6 zugeführt, wobei zwischen der Entkarbonisierungsvorrichtung 10 und der Wassersprüheinrichtung 16 ein Mengenregelventil 18 sitzt. Einem Dampferzeuger 20 wird abgesalztes Wasser 22 zugeführt. Dampf 24 aus dem Dampferzeuger 20 wird über ein Mengenregelventil 26 einer Dampfinjektionseinrichtung 28 der Brühvorrichtung 6 zugeführt. Die Vorreinigungsvorrichtung 4 besitzt einen inneren Arbeitsraum 30, die Brühvorrichtung 6 besitzt einen inneren Arbeitsraum 32. Im weiter unten noch genauer zu beschreibenden Umwälzweg des Brühmediums in der Brühvorrichtung 6 ist ein Temperaturfühler 34 angeordnet, der seine Signale an einen Regler 36 gibt. Der Regler 36 gibt seine Befehlssignale an die Mengenregelventile 18 und 26, um so eine Regelung der Temperatur des Brühmediums zu schaffen.

Die Temperatur des durch die Dampfinjektionseinrichtung 28 injizierten Dampfes beträgt typischerweise 135 bis 155°C, wobei es sich um einen nahe der Sättigung befindlichen Dampf handelt. Dampf wird typischerweise in einer Megen von etwa 1,5 bis 2 kg mit einem Überdruck von z. B. 4 bar injiziert. Durch die Wassersprüheinrichtung 16 wird typischerweise eine Menge von etwa 0,7 1 Wasser pro Schwein eingebracht. Das injizieren von Dampf dient der Wärmezufuhr zu dem Brühmedium, zugleich wird hierdurch Feuchtigkeit eingebracht. Das Einbringen von Wasser durch die Wassersprüheinrichtung 16 dient dazu, das Brühmedium, also feuchte Luft, in einen mit Wasser übersättigten Zustand zu bringen.

Mittels der Entkarbonisierungsvorrichtung 10 wird das z. B. aus dem Leitungsnetz stammende Wasser 12 in einen entkarbonisierten Zustand mit maximal 6°d gebracht. Es versteht sich, daß für die Wasserzuführeinrichtung 14 und die Wassersprüheinrichtung 16 auch zwei gesonderte Entkarbonisierungsvorrichtungen 12 vorgesehen sein könnten.

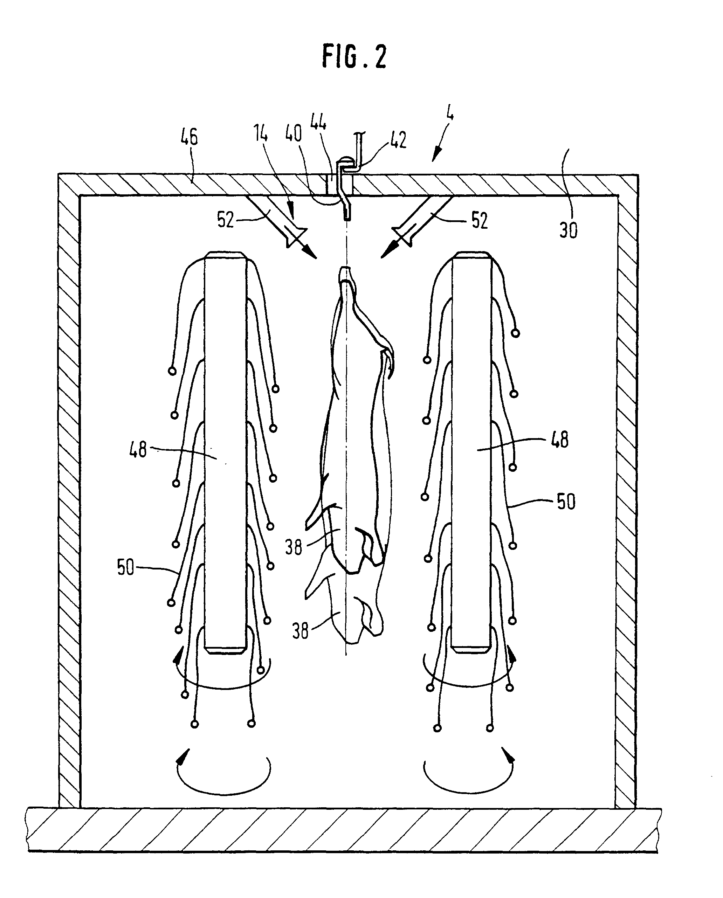

Fig. 2 zeigt den Behandlungsraum 30 der Vorreinigungsvorrichtung 4. Es sind Schweine 38 in zwei unterschiedlichen Größen eingezeichnet, die z. B. nacheinander durch die Anlage 2 gefördert werden. Jedes Schwein 38 hängt an einem Transporthaken 40 mit Anschlingkette, der seinerseits auf einer Rohrbahn 42 gleitet. Ein oberhalb der Rohrbahn 42 parallel zu dieser verlaufender Hakenförderer ist nicht eingezeichnet. Jeder der Haken 40 greift durch einen Schlitz 44 im oberen Abschluß 46 der Vorreinigungsvorrichtung 4 von außen her in das Innere der Vorreinigungsvorrichtung 4. Es sind zwei Peitschenwalzen 48 im nicht rotierenden Zustand, d. h. mit herabhängenden Peitschensträngen 50 eingezeichnet. Sobald die Peitschenwalzen 48 durch nicht eingezeichnete Elektromotoren rotiert werden, schlagen die Peitschenstränge 50 allseitig auf die Oberfläche der Schweine 38 ein. Durch Rohre 52 der Wasserzuführeinrichtung 14 wird leicht erwärmtes Wasser über die Schweine 38 gespült. Insbesondere im Fall einer höheren stündlichen Durchsatzleistung der Anlage 2 ist nicht nur ein einziges Paar von Peitschenwalzen 48 vorgesehen, sondern in Bewegungsrichtung der Schweine 38 hintereinander mehrere Paare. Die Peitschenwalzen 48 müssen nicht zwingend paarweise angeordnet sein, sondern man kann z. B. auch mit Peitschenwalzen 48 arbeiten, bei der eine linke Peitschenwalze 48 - wenn man die Förderrichtung der Schweine 38 betrachtet - zwischen zwei rechten Peitschenwalzen 48 ist. Es gibt auch Vorreinigungsvorrichtungen 4 mit einer ungeraden Anzahl von Peitschenwalzen 48.

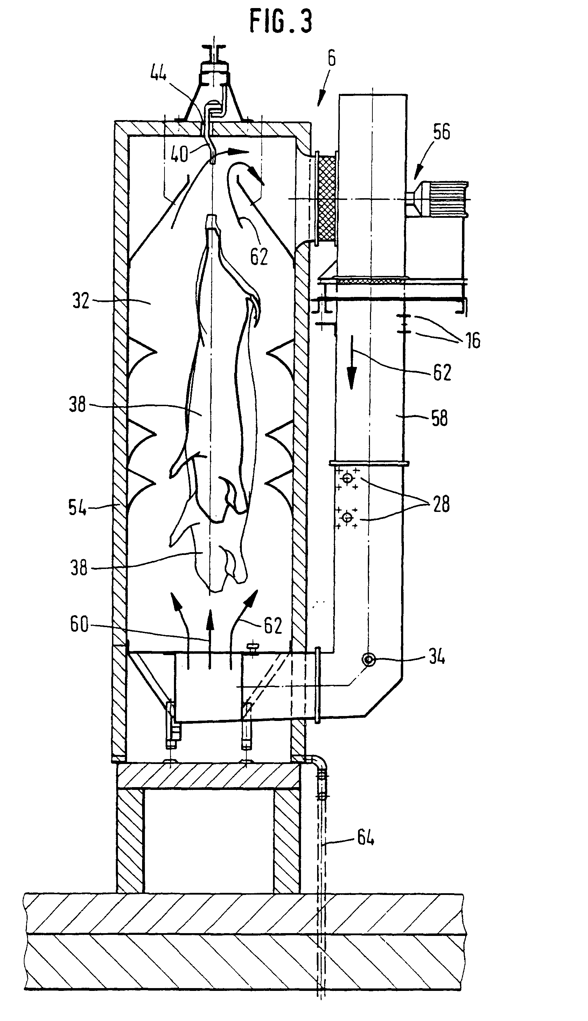

In Fig. 3 sieht man die Brühvorrichtung 6, wiederum mit zwei eingezeichneten Schweinen 38 ungleicher Größe, hängend an einem Transporthaken 40, der durch einen Schlitz 44 von außen nach innen greift. Der Behandlungsraum 32 der Brühvorrichtung 6 ist mit einer wärmeisolierten Wandung 54 versehen.

Im oberen Endbereich des Behandlungsraums 32 wird mittels eines Gebläses 56 Brühmedium zur Seite hin abgesaugt und durch einen vertikalen Schacht 58 großen Querschnitts nach unten geführt. Ziemlich weit oben im Schacht 58, aber unterhalb des Gebläses 56, ist die Wassersprüheinrichtung 16, d. h. ein Düsenrohr mit einer oder mehreren Wassersrühdüsen, angeordnet. Ein Stück weiter unten im Schacht 58 ist die Dampfinjektionseinrichtung 28, d. h. eine Dampflanze angeordnet. Noch weiter unten im Schacht 58 befindet sich der Temperaturfühler 34. Der Schacht 58 biegt an seinem unteren Ende 2 Mal rechtwinklig ab und hat dann eine Austrittsöffnung 60 im Boden des Behandlungsraums 32. Das durch die Öffnung 60 in den Behandlungsraum 32 eintretende Brühmedium ist mit Wasserdampf kräftig übersättigte Luft mit z. B. 63°C. Ein Teil des Wasserdampfs kondensiert auf dem in dem Behandlungsraum 32 befindlichen Schwein 38 und bringt die Haut des Schweins 38 auf die gewünschte Brühtemperatur. Zugleich läuft kondensiertes Wasser am Schwein 38 nach unten. Im oberen Endbereich des Behandlungsraums 32 hat das Brühmedium eine geringfügig niedrigere Temperatur als 63°C. Von dort wird das Brühmedium wieder in den Schacht 58 gefördert. Der beschriebene Umwälzweg des Brühmediums ist mit den Pfeilen 62 symbolisiert. Unten aus dem Behandlungsraum 32 kann kondensiertes Wasser durch eine Rohrleitung 64 ablaufen.

Bei einer vergleichsweise niedrigen Durchsatzleistung von 60 Schweinen pro Stunde bildet man die Anlage 2 mit nur einer der gezeichneten und beschriebenen Brühvorrichtungseinheit 6 aus. Für höhere Durchsatzleistungen setzt man mehrere Einheiten in Förderrichtung der Schweine 38 hintereinander.

Der Gesamtarbeitsablauf in einem Schlachthof für Schweine ist normalerweise so, daß die Schweine, der Reihe nach, zunächst, z. B. elektrisch oder mit CO₂, betäubt werden und dann z. B. durch Einstechen in die Halsschlagader abgestochen werden. Nach dem Entbluten schließt sich die beschriebene Schlachttier-Vorreinigungs- und Brühanlage 2 an. Danach kommt typischerweise eine Enthaarungsanlage, in der die Borsten der Schweine von der gebrühten Haut entfernt werden. Anschließend erfolgt die Zerlegung in Schweinehälften.

Der beschriebene Schlitz 44 kann durch bürstenartige oder längslippenartige Abdichtelemente abgedichtet sein.

## Patentansprüche

1. Schlachttier-Vorreinigungs- und Brühanlage,
aufweisend eine Vorreinigungsvorrichtung (4) mit einer Wasserzuführeinrichtung (14) zum Zuführen von Wasser für das Vorreinigen der Schlachttiere (38) in den Arbeitsraum (30) der Vorreinigungsvorrichtung (4)
und eine nach dem Kondensationsprinzip arbeitende Brühvorrichtung (6) mit einer Wassersprüheinrichtung (16) zum fein verteilten Einbringen von Wasser in das Brühmedium der Brühvorrichtung (6),
**dadurch gekennzeichnet, daß** die Wasserzuführeinrichtung (14) und die Wassersprüheinrichtung (16) an eine gemeinsame Wasser-Entkarbonisierungsvorrichtung (10) oder jeweils an eine eigene Wasser-Entkarbonisierungsvorrichtung angeschlossen sind, wobei die Wasser-Entkarbonisierungsvorrichtung(en) (10) derart ausgebildet ist (sind), daß Wasser mit einer Karbonathärte von maximal 6°d geliefert wird.

2. Anlage nach Anspruch 1,
**dadurch gekennzeichnet, daß** die Wasser-Entkarbonisierungsvorrichtung(en) (10) derart augebildet ist (sind), daß Wasser mit einer Kabonathärte von maximal 5°d geliefert wird.

3. Anlage nach Anspruch 1,
**dadurch gekennzeichnet, daß** die Wasser-Entkarbonisierungsvorrichtung(en) (10) derart ausgebildet ist (sind), daß Wasser mit einer Karbonathärte von maximal 4°d geliefert wird.

4. Anlage nach Anspruch 1,
**dadurch gekennzeichnet, daß** die Wasser-Entkarbonisierungsvorrichtung(en) (10) derart ausgebildet ist (sind), daß Wasser mit einer Karbonathärte von maximal 2°d geliefert wird.

5. Anlage nach einem der Ansprüche 1 bis 4,
**dadurch gekennzeichnet, daß** die Vorreinigungsvorrichtung (4) mit Peitschenwalzen (48) ausgerüstet ist.

6. Anlage nach einem der Ansprüche 1 bis 5,
**dadurch gekennzeichnet, daß** die Vorreinigungsvorrichtung (4) Wasserdüsen zum Aufspritzen von Druckwasser gegen die Schlachttiere (38) aufweist.

7. Anlage nach einem der Ansprüche 1 bis 6,
**dadurch gekennzeichnet, daß** die Brühvorrichtung (6) eine Brühvorrichtung mit Umwälzung des Brühmediums und Einstellung von Temperatur und Wassergehalt des Brühmediums in einem neben dem Arbeitsraum (32) der Brühvorrichtung (6) liegenden Teil des Umwälzweges (62) ist.

8. Anlage nach einem der Ansprüche 1 bis 7,
**dadurch gekennzeichnet, daß** die Brühvorrichtung (6) eine Dampfinjektionseinrichtung (28) aufweist, mit der sich die Temperatur des Brühmediums erhöhen läßt.

9. Anlage nach einem der Ansprüche 1 bis 8,
**dadurch gekennzeichnet, daß** der Wassersprüheinrichtung (16) ein Mengenregelventil (18) zugeordnet ist.

10. Anlage nach Anspruch 8 oder 9,
**dadurch gekennzeichnet, daß** der Dampfinjektionseinrichtung (28) ein Mengenregelventil (26) zugeordnet ist.

11. Anlage nach einem der Ansprüche 1 bis 10,
**dadurch gekennzeichnet, daß** in ihrer oberen Abschlußdecke (46) ein Schlitz (44) vorgesehen ist, durch den Transporthaken (40) der Schlachttiere (38) von außen her in das Innere der Anlage ragen.

## Claims

1. A pre-cleaning and scalding plant for animals for slaughter, comprising
a pre-cleaning device (4) having a water supply means (14) for supplying water for pre-cleaning of the animals for slaughter (38) into the working space (30) of the pre-cleaning device (4), and
a scalding device (6) operating in accordance with the condensation principle and having a water spraying means (16) for a finely distributed introduction of water into the scalding medium of the scalding device (6),
**characterized in that** the water supply means (14) and the water spraying means (16) are connected to a common water decarbonation device (10) or to a separate water decarbonation device each, said water decarbonation device(s) (10) being designed so as to deliver water with a carbonate hardness of 6°d at maximum.

2. A plant according to claim 1,
**characterized in that** the water decarbonation device(s) (10) is (are) designed so as to deliver water with a carbonate hardness of 5°d at maximum.

3. A plant according to claim 1,
**characterized in that** the water decarbonation device(s) (10) is (are) designed so as to deliver water with a carbonate hardness of 4°d at maximum.

4. A plant according to claim 1,
**characterized in that** the water decarbonation device(s) (10) is (are) designed so as to deliver water with a carbonate hardness of 2°d at maximum.

5. A plant according to any of claims 1 to 4,
**characterized in that** the pre-cleaning device (4) is equipped with whip rollers (48).

6. A plant according to any of claims 1 to 5,
**characterized in that** the pre-cleaning device (4) has water nozzles for spraying pressurized water against the animals for slaughter (38).

7. A plant according to any of claims 1 to 6,
**characterized in that** the scalding device (6) is a scalding device employing circulation of the scalding medium and adjustment of the temperature and water content of the scalding medium in a portion of the circulation path (62) located beside the working space (32) of the scalding device (6).

8. A plant according to any of claims 1 to 7,
**characterized in that** the scalding device (6) has a steam injection means (28) adapted to increase the temperature of the scalding medium.

9. A plant according to any of claims 1 to 8,
**characterized in that** the water spraying means (16) has a volume regulating valve (18) associated therewith.

10. A plant according to claim 8 or 9,
**characterized in that** the steam injection means (28) has a volume regulating valve (26) associated therewith.

11. A plant according to any of claims 1 to 10,
**characterized in that** it is provided, in its upper terminal ceiling (46), with a slot (44) through which transportation hooks (40) for the animals for slaughter (38) project inside the plant from the outside.

## Revendications

1. Installation de pré-nettoyage et d'ébouillantage d'animaux de boucherie, présentant un dispositif de pré-nettoyage (4) pourvu d'un système d'alimentation en eau (14) pour fournir de l'eau destinée au pré-nettoyage des animaux de boucherie (38) dans le local de travail (30) du dispositif de pré-nettoyage (4)
et un dispositif d'ébouillantage (6) travaillant selon le principe de la condensation, comportant un dispositif de pulvérisation d'eau (16) pour fournir de l'au finement répartie dans le fluide d'ébouillantage du dispositif d'ébouillantage (6),
**caractérisée en ce que** le système d'alimentation en eau (14)et le dispositif de pulvérisation d'eau (16) sont reliés à un dispositif d'adoucissage de l'eau commun (10) ou chacun à un dispositif d'adoucissage de l'eau individuel, le (les) dispositifs) d'adoucissage de l'eau (10) est (sont) conformé(s) de telle sorte que l'eau soit délivrée avec une dureté maximale de 6°d.

2. Installation selon la revendication 1, **caractérisée en ce que** le (les) dispositifs) d'adoucissage de l'eau (10)sont conformés de telle sorte que l'eau soit délivrée avec une dureté maximale de 5°d.

3. Installation selon la revendication 1, **caractérisée en ce que** le (les) dispositifs) d'adoucissage de l'eau (10)sont conformés de telle sorte que l'eau soit délivrée avec une dureté maximale de 4°d.

4. Installation selon la revendication 1, **caractérisée en ce que** le (les) dispositifs) d'adoucissage de l'eau (10)sont conformés de telle sorte que l'eau soit délivrée avec une dureté maximale de 2°d.

5. Installation selon les revendications 1 à 4, **caractérisée en ce que** le dispositif de pré-nettoyage (4) est pourvu de rouleaux fouetteurs (48).

6. Installation selon les revendications 1 à 5, **caractérisée en ce que** le dispositif de pré-nettoyage (4) est pourvu de buses de pulvérisation d'eau pour pulvériser de l'eau sous pression sur les animaux de boucherie (38).

7. Installation selon les revendications 1 à 6, **caractérisée en ce que** le dispositif d'ébouillantage (6) est un dispositif d'ébouillantage avec circulation du fluide d'ébouillantage et réglage de température et de la teneur en eau du fluide d'ébouillantage dans une partie du trajet de recirculation (62) située à côté du local de travail (32) du dispositif d'ébouillantage (6).

8. Installation selon les revendications 1 à 7, **caractérisée en ce que** le dispositif d'ébouillantage (6) présente un dispositif d'injection de vapeur (28) avec lequel on peut élever la température du fluide d'ébouillantage.

9. Installation selon les revendications 1 à 8, **caractérisée en ce qu'**une soupape de dosage (18) est affectée au dispositif de pulvérisation d'eau (16).

10. Installation selon la revendication 8 à 9, **caractérisée en ce qu'**une soupape de dosage (26) est affectée au dispositif d'injection de vapeur (28).

11. Installation selon les revendications 1 à 10, **caractérisée en ce que** dans son plafond terminal (46) est prévue une fente (44) à travers laquelle les crochets de transport (40) des animaux de boucherie (38) pénètrent à l'intérieur depuis l'extérieur.
